# EUROPEAN PATENT APPLICATION

(11) **EP 2 860 110 A1**
(43) Date of publication of application: **15.04.2015**
(21) Application number: 13188262.3
(22) Date of filing: 11.10.2013
(51) Int. Cl.: B64D 1/18, A62C 3/02

(54) **Fire control process and device**

(71) Applicant: Invenio Consulting S.r.L., 16121 Genova (IT)
(72) Inventor: Ghio, Marco, 16121 Genoa (GE) (IT)
(74) Representative: Lunati & Mazzoni S.r.L.

(57) **Abstract**

A fire (1 a) control device(1) is provided comprising at least one aerostat (10) comprising a casing (11) defining an air chamber (11a) suitable to contain a gas lighter than air, a tank (12) defining a collection space (12a) for extinguisher fluid (10a), an identification device (13) suitable to identify when the aerostat (10) is above the fire (1 a) and a valve (14) suitable to permit dropping of the extinguisher fluid (10a) when said at least one aerostat (10) finds itself above said fire (1a).

## Description

The present invention relates to a fire control process and device of the type as recited in the preamble of the independent claims.

As known, over recent decades the problem of fires has become increasingly important on account of the significant increase in the frequency of forest fires. As a result, to control and put out fires both land and aerial operations are currently used, co-ordinating various bodies, such as the fire brigade, civil protection forces, police forces and volunteers.

In detail, land operations provide for fire control by means of two measures: the clearing of specific areas so as to prevent fires from advancing by depriving them of fuel (vegetation); and the use of fire hydrants and similar means which throw water and/or extinguisher liquids such as, for example ammonium phosphate-based mixtures, on the fire front.

Aerial operations involve the use of helicopters, planes or other aircraft provided with a container to pick up water from special reserves and then drop it on both the fire front and the centre of the fire so as to prevent it from spreading.

The prior art described above has several significant drawbacks.

A first significant drawback is represented by the fact that land operations prove of little effect on account of the limited impact which they have, in particular, on large scale fires.

Another drawback is represented by the fact that, aerial operations have particularly high costs related to both the purchase, use and maintenance of the means and to the personnel needed to operate them.

In particular, such costs have imposed a limited purchase/use of such appliances by various countries, which are thus considerably fewer than those really needed.

One important problem is the fact that, for reasons of safety, aerial operations can only be performed by day and, given the need to refill with water after each operation and the need to regularly refuel with fuel, they are only able to perform a limited number of drops.

A further problem is represented by the fact that the operations currently performed do not guarantee an optimal spraying of the water.

In detail, in land operations the distance at which the water is sprayed is very limited, while in aerial operations the drop is instantaneous and consequently, concentrates a large quantity of water over a relatively limited area.

Another important drawback is therefore the fact that, to control fires large quantities of water are needed.

A further problem derives from the fact that the use of such aerial means can only be adopted if there is at least one dedicated point in the vicinity for refilling with water (lake, calm sea, basin etc.).

Another drawback of no less importance is the fact that, with the systems of the prior art, fire control is extremely complex and time-consuming and consequently such fires cause significant and extensive damage before being put out. In this situation the technical purpose of the present invention is to develop a fire control process and device able to substantially overcome the inconveniences mentioned above.

Within the sphere of said technical purpose one important aim of the invention is to provide a control device which makes it possible to quickly control and thus put out fires.

Another important aim of the invention is to obtain a control process and device which are particularly easy to actuate and which are not particularly expensive. A further aim of the invention is to devise a fire control process and device which is able to minimise the use of water or other extinguisher liquids.

The technical purpose and specified aims are achieved by a fire control process and device as claimed in the appended independent claims.

Preferred embodiments are described in the dependent claims.

The characteristics and advantages of the invention are clearly evident from the following detailed description of a preferred embodiment thereof, with reference to the accompanying drawings, in which:
**Fig. 1** shows the fire control device according to the invention;
**Fig. 2** shows a component of the fire control device;
**Fig. 3** shows another component of the fire control device; and
**Fig. 4** shows a diagram of the fire control process.

With reference to said drawings, reference numeral **1** globally denotes the fire control device according to the invention.

It comprises one or more aerostats **10,** substantially consisting of drones, that is to say vehicles without a cabin or seat for a pilot, suitable to fly over a fire **1a** and to drop water or another extinguisher fluid **10a** onto it and at least one storage unit **20** suitable to be connected to several aerostats 10.

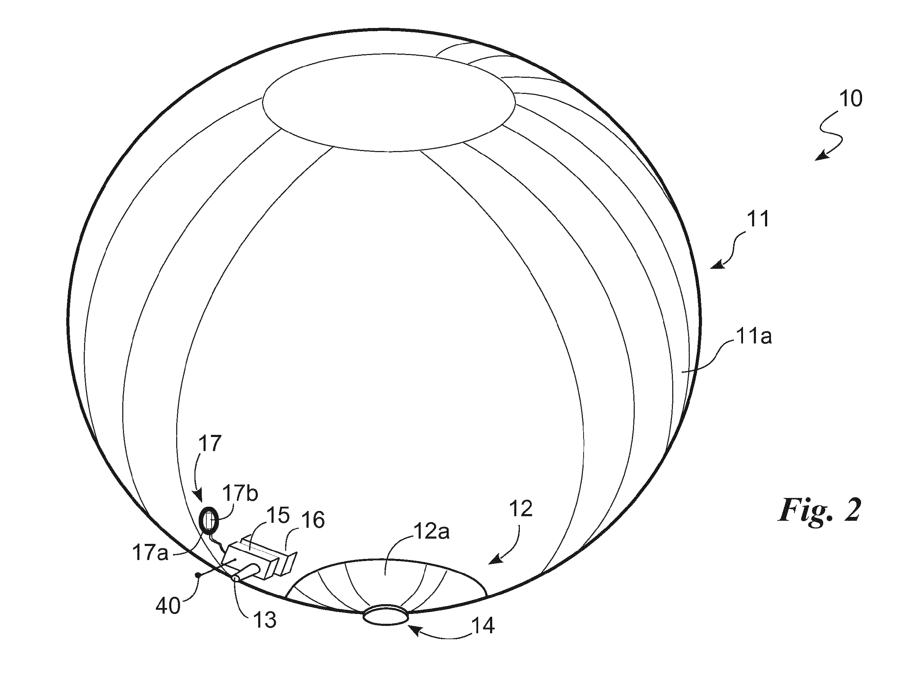

The aerostat 10, as shown in Fig. 2, mainly comprises a casing **11** defining an air chamber **11a** suitable to contain a mixture of several gases lighter than air, such as helium; a tank **12** defining a collection space **12a** for the extinguisher fluid 10a; an identification device **13** suitable to identify when the aerostat 10 is above the fire 1a; a valve **14** suitable to place the collection space 12a in communication with the external environment; a control card **15** and a battery **16** suitable to power the components of the aerostat 10. Alternatively the aerostats 10 act as mere sensors to verify the expansion of the fire and various parameters thereof.

The casing 11 and the tank 12 are made of synthetic textile such as aliphatic polyamides, polyesters or other similar materials suitable to respectively define an air chamber 11a and a collection space 12a of the watertight type.

The identification device 13 may comprise heat sensors or other sensors able to recognise when the aerostat 10 finds itself over the fire 1a.

Preferably, the identification device 13 makes it possible to identify when the aerostat 10 is above the fire 1a based on the position of said aerostat 10. It may consequently be identified in a satellite positioning system and preferably in a Global Positioning System (or GPS).

The valve 14 may be a solenoid valve or other similar device able to realise/interrupt the fluid through connection between the space 12a and the outside environment depending on an electric signal.

The aerostat 10 may, in addition, comprise one or more supplementary valves **17,** preferably solenoid valves, suitable to place the inner tube 11a in gas through connection with the outside environment.

In particular, the supplementary valve 17 comprises a closure membrane **17a,** made from polymer material, positioned in correspondence with an aperture for the purpose made in the tank 12 and an electric element **17b** which, depending on an electric signal, is suitable to command the opening of the supplementary valve 17 removing the membrane 17a from said aperture.

More in particular, the closure membrane 17a has a layer of glue suitable to keep the supplementary valve 17 in the closed configuration, while the electric element 17b is a resistor integrated in the membrane 17b and which, at the moment of passing into the open configuration, heats the membrane 17a causing the rupture thereof so that the pressure of the fluid inside pushes out the gas contained therein with a subsequent loss of aerostatic thrust.

To enable easy movement of the aerostats 10, the control device 1 comprises at least one storage unit 20.

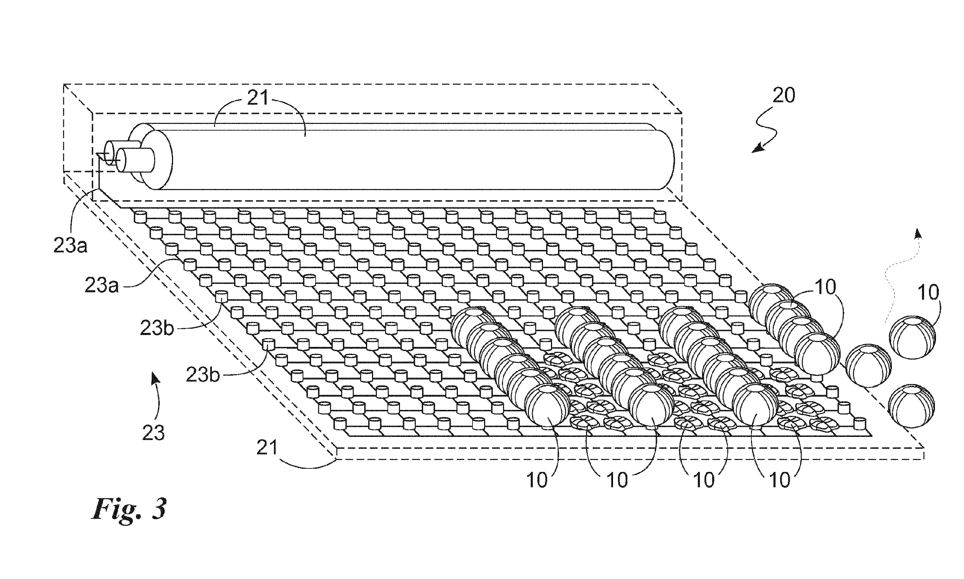

Such storage unit 20, shown in Fig. 3, comprises a support structure **21** to which a plurality of aerostats 10 are connected, at least one recipient **22** suitable to contain the gas lighter than air and a filling apparatus **23** suitable to place the recipient 22 in gas through connection with the aerostats 10.

In particular, the apparatus 23 comprises ducts **23a** suitable to place the recipient 22 in gas through connection with the aerostats 10; a series of connectors **23b** suitable to permit the connection of the recipient 22 and the aerostats to said ducts; and a controller suitable to control the functioning of the apparatus 23.

To facilitate the transport of the aerostats 10, the storage units 20 may be positioned inside appropriate containers fitted with guides or other similar elements suitable to permit the easy and rapid insertion and removal of said storage units 20 from the containers. Said containers may be easily stored and positioned on mobile means (lorries) ready to be rapidly positioned in the intervention sites as needed.

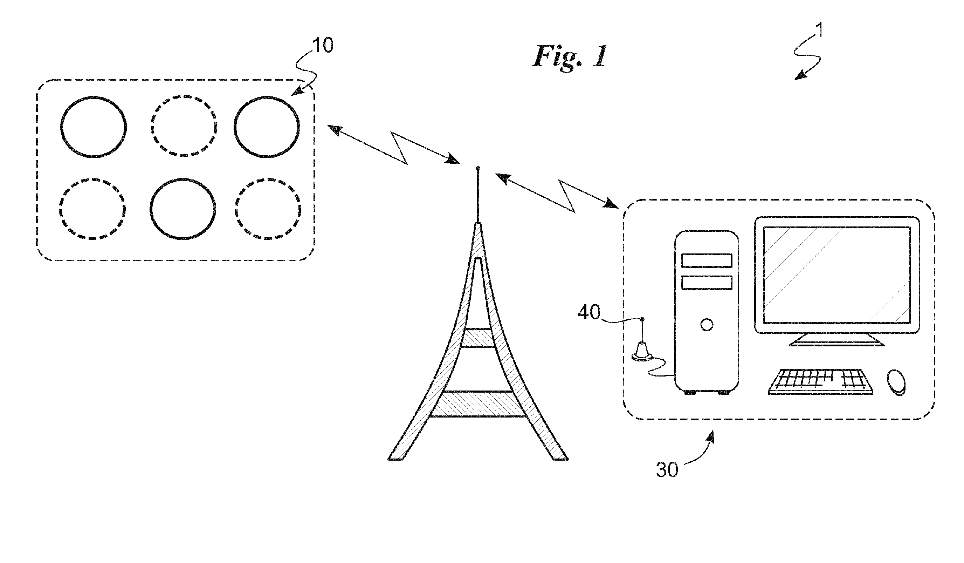

Lastly, the control device 1, as shown in Fig. 1, comprises a controller **30** suitable to manage and plan the use of the aerostats 10 in relation to the fire zone, as described further below. Preferably, the controller 30 is identifiable in a computer separate from the aerostat 10 and placed in through data connection with the aerostats 10 by connection means **40** suitable to realise a wireless type connection.

In particular, the connection means 40 are suitable to permit the one way passage of data from the controller 30 to the aerostats 10.

The invention comprises a new fire control process **100.**

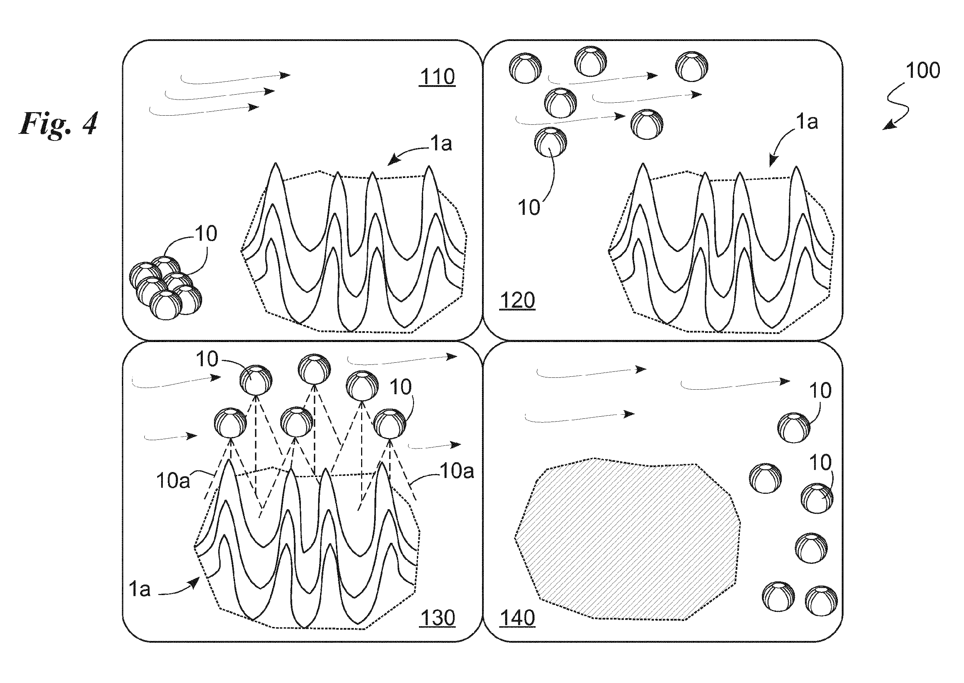

The control process 100, illustrated in Fig. 4, comprises a departure step **110,** in which a departure site proximal to the fire front of the fire 1a is calculated on the basis of the parameters of the fire and of environmental parameters and from which the aerostats 10 are made to depart; an overflight step **120** in which the aerostats 10 fly over the fire 1a; a drop step **130** in which the aerostats 10 drop the extinguisher fluid 10a onto the fire 1a; and a landing step **140**, in which a landing site is identified for the aerostats 10.

In the departure step 110, the controller 30 calculates the trajectory which the aerostats 10 should passively cover on the basis of parameters of the fire and of environmental parameters, that is to say varied input information among which the location and size of the fire 1a, direction and intensity of the winds, orography of the terrain and other parameters, and selects a departure site for the location of one or more storage units 20 sending the information needed for the mission to each aerostat 10.

The departure base is selected in such a way that the aerostats 10 can passively fly over the fire, that is to say without motors, according to suitable trajectories, as explained below, so as to be able to control and/or put it out simply thanks to the external environmental forces.

The storage unit 20, once in the respective departure site, connects one or more recipients 22 to the filling apparatus 23 and then fills the air chambers 11a with the gas lighter than air.

In detail, the gas lighter than air is made to come out of the recipient 22 and then, through the ducts 23a of the filling apparatus 23, begins to flow inside the air chamber 11a until the gas inside the chamber 11a reaches a pressure above atmospheric pressure.

More specifically, the filling apparatus 23 commands an alternate filling of the aerostats 10 which can thus be performed in alternate rows (one row of aerostats 10 being pumped and one or more rows of aerostats 10, two in Fig. 3, on standby) or alternatively according to a chessboard arrangement. As a further alternative, each aerostat 10 is connected to the filling apparatus 23 by means of a duct 23a of the extensible type so as to permit the simultaneous pumping of a greater number of aerostats 10 using a larger area than the surface area of the storage unit 20.

Moreover, during such step, the operator divides the fire zone into at least one area of intervention by means of the controller 30. In particular, the controller divides the fire zone into a plurality of intervention areas characterised by different intervention priorities consequently identifying a main area of intervention having a maximum priority and substantially corresponding to the centre of the fire 1a; several secondary intervention areas of gradually decreasing priority as one moves away from the centre of the fire 1a and positioned laterally to the main area of intervention, that is to say situated, according to the direction identified by the fire front, laterally to the main intervention area.

At this point, the controller 30 is connected to the aerostats 10 so as to memorise on them the various areas of intervention associating with each the priority just calculated.

Once the filling and memorisation operations are complete, the filling apparatus 23 disconnects the aerostats 10 detaching them from the connectors 23b and commencing the next overflight step 120.

In this step 120 the aerostats 10 tend to fly over the fire 1a according to a flight trajectory determined by the parameters of the fire 1a and, in particular, by the currents of air present in the area of expansion of the fire 1a.

Finally, the aerostats 10, thanks to the currents of air present in the fire zone, fly over the fire 1a according to a flight trajectory of the aerostats 10 depending on the parameters of the fire 1a, that is to say on those parameters affecting the expansion of the fire 1a such as, for example, atmospheric parameters (air temperature, wind, air currents, humidity, rainfall); those relative to the topography of the territory where the fire 1a is expanding (inclination and direction of the slope, presence of ravines); and parameters relative to the combustible encountered by the fire 1a during its expansion (dimension, quantity, type and characteristics of the vegetation).

During the overflight step 120, that is to say while the aerostats 10 are thrust above the fire1a; the control card 15 of each aerostat 10 performs a control operation. In detail, the control card 15 identifies, by means of the identification device 13, the position of said aerostat 10 and compares it to the areas of intervention memorised on the aerostat.

If the position of the aerostat does not fall within any of the areas of intervention, the control card 15 deactivates the identification device 13 and, then, after a given pause, for example of 10 seconds, performs the control operation again.

If, instead, the position of the aerostat 10 falls within one of the areas of intervention, the drop step 130 commences which is consequently substantially performed in parallel with the overflight step 120 and in which the control card 15 commands the opening of the valve 14 and consequently the dropping of the extinguisher fluid 10a onto the fire 1a.

After completing the drop step 130, the aerostats 10 continue along the flight trajectory until close to the landing site.

At this point the overflight step 120 is terminated and the landing step 140 commences.

In this step 140, the control card 15 commands the opening of the supplementary valve 17 so that at least some of the gas lighter than air escapes from the air chamber 11a causing the descent and landing of the aerostats 10.

The invention achieves some important advantages.

A first important advantage lies in the fact that the operations performed by means of the control device 1 and therefore implementing the process 100 prove extremely efficient on account of the ability to drop a large quantity of extinguisher fluid 10a with a high degree of precision.

This result has been achieved by exploiting, in an innovative manner, the fact of using autonomous devices 10 without any control of direction by forecasting in advance the trajectory they will adopt once released, depending on the various parameters of the fire 1a, with the aim of directing the greatest number of aerostats 10 possible towards the centre of the fire 1a and thus ensuring the correct dropping of the fluid 10a.

Such advantage is also due to the presence of the identification device 13 which permits the dropping of the fluid 10a precisely over the fire 1a only.

Such dropping precision is also increased by the fact that, by performing a number of simulations of the control process 100 on a computer, the drop point, the optimal departure point and the point /moment in which to drop the extinguisher fluid 10a can be accurately identified.

In fact, by inserting in a computer of the controller 30 the parameters of the fire 1a, in other words all those parameters which influence the expansion of the fire 1a, it is possible to simulate the flight trajectory of the aerostats 10, and thus identify the departure site ensuring an optimal trajectory, then locating the dropping point which ensures the maximum efficacy of the extinguisher fluid 10a.

Another important advantage achieved thanks to said dropping precision is the fact that, the control device 1 and process 100 make it possible to extinguish a fire 1a with a reduced quantity of extinguisher fluid 10a.

In particular the possibility of using a plurality of aerostats 10 makes it possible to have a continuous and evenly distributed jet of extinguisher fluid all over the fire 1a and thus to prevent the extinguisher fluid 10a, as happens now in aerial operations, from being dropped over a relatively reduced surface area.

One important advantage is the fact that, thanks to the control device 1, it is possible to act on a fire minimising intervention costs.

In fact, as well as the reduced quantity of extinguisher fluid 10a, the control device 1 and process 100 using the aerostats 10 guided by currents of air present in the fire zone 1a, does not require motors or other drive mechanisms.

Such aspect further permits minimisation of the costs of making a large number of aerostats 10 which among other things may even be recovered for future use, again thanks to the geolocation system.

A further advantage is the fact that the device 1 also minimises the risk to inhabitants and in particular, to their homes.

In fact, given that the aerostats 10 are characterised by a greatly reduced mass, in the event of them impacting against a building they would not give rise to any damage or problems for the same.

Another advantage is that the device 1 also makes it possible to reduce the risks, above all, to the operators, who no longer on board the aerostats can follow the development of the control process 100 at a suitable distance from the fire 1a.

Moreover, since the aerostats do not require any guidance, diversely from up to now, aerial operations can be performed regardless of environmental conditions and both during the day and night.

Another advantage of no less importance is the fact that the control device 1 and process 100 make it possible to extinguish a fire 1a in a shorter time and thus limit the environmental damage produced by it.

Another advantage is the reduced operation time.

In fact, thanks to the presence of the storage unit 20, a plurality of aerostats 10 can be distributed in advance all along the territory so as to be able to implement the process 100 in an extremely short time.

Another advantage of no less importance is that, if an unexpected change in the expansion of the fire 1a is recorded during the overflight step 120, the controller 30 can be connected to the aerostats 10 in flight so as to modify the intervention area and thereby maximise the action of the aerostats 10.

Modifications and variations may be made to the invention described herein without departing from the scope of the inventive concept. All the elements as described and claimed herein may be replaced with equivalent elements and the scope of the invention includes all other details, materials, shapes and dimensions.

## Claims

1. Fire (1a) control process (100) using a fire (1a) control device (1) comprising at least one aerostat (10) comprising a casing (11) defining an air chamber (11a) suitable to contain a gas lighter than air, a tank (12) defining a collection space (12a) for extinguisher fluid (10a); an identification device (13) suitable to identify when said at least one aerostat (10) finds itself above the fire (1a) and a valve (14) suitable to permit the dropping of said extinguisher fluid (10a) when said at least one aerostat (10) finds itself above said fire (1a), said control process (100) being **characterised in that** it comprises a departure step (110) in which the trajectory which the aerostats (10) should passively cover is calculated and selected, on the basis of the parameters of the fire and of environmental parameters, a departure site proximal to said fire front, in such a way that said aerostats (10) are programmed to passively fly over said fire according to suitable trajectories; an overflight step (120) in which said at least one aerostat (10) flies over the fire (1a) according to a flight trajectory determined by parameters of said fire; and a dropping step in which said at least one aerostat (10) drops extinguisher fluid (10a) onto said fire (1a).

2. Control process (100) as claimed in the preceding claim, in which said dropping step (130) is performed concurrently with said overflight step (120).

3. Control process (100) as claimed in one or more of the preceding claims, comprising a landing step (140) in which a landing site is identified for said at least one aerostat (10) depending on said flight trajectory..

4. Control process (100) as claimed in one or more of the preceding claims, in which said identification device (13) recognises when said at least one aerostat (10) finds itself above the fire (1a) depending on the position of said at least one aerostat (10).

5. Control process (100) as claimed in one or more of the preceding claims, in which said control device (1) comprises a controller (30) suitable to memorise on said at least one aerostat at least one intervention area; and in which said identification device (13) identifies when said at least one aerostat (10) finds itself above said at least one intervention area.

6. Control process (100) as claimed in one or more of the preceding claims, in which said at least one aerostat (10) comprises a supplementary valve (17) suitable to permit said gas lighter than air to escape from said air chamber (11a).

7. Control process (100) as claimed in one or more of the preceding claims, in which said control device (1) comprises a storage unit (20) suitable to be connected to a plurality of said at least one aerostats (10).

8. Control process (100) as claimed in one or more of the preceding claims, in which said storage unit (20) comprises at least one recipient (22) suitable to contain said gas lighter than air and a filling apparatus (23) suitable to place said at least one recipient (22) and said aerostats (10) in gas through connection.
